# EUROPEAN PATENT APPLICATION

(11) **EP 2 275 922 A1**
(43) Date of publication of application: **19.01.2011**
(21) Application number: 10156738.6
(22) Date of filing: 17.03.2010
(51) Int. Cl.: G06F 3/14

(54) **Display apparatus and graphic display method**

(30) Priority: 03.07.2009 KR 20090060679
(71) Applicant: Samsung Electronics Co., Ltd., Suwon-si, Gyeonggi-do 442-742 (KR)
(72) Inventor: Kim, Young-kook, Gyeonggi-do (KR); Choi, Kyoung-oh, Seoul (KR)
(74) Representative: Brandon, Paul Laurence

(57) **Abstract**

A display apparatus and a graphic display method are provided. A display apparatus includes a graphic processing unit which converts data received from an external device into graphics, and a display unit which displays a graphics. Accordingly, the display apparatus can display a high quality 3-dimensional image.

## Description

### CROSS-REFERENCE TO RELATED APPLICATIONS

This application claims priority from Korean Patent Application No. 10-2009-0060679, filed on July 3, 2009 in the Korean Intellectual Property Office, the disclosure of which is incorporated herein by reference in its entirety.

### BACKGROUND OF THE INVENTION

### 1. Field of the Invention

Apparatuses and methods consistent with the present invention relate to a display apparatus and a graphic display method using the same, and more particularly, to a display apparatus which displays a graphical image of a high quality, and a graphic display method using the same.

### 2. Description of the Related Art

Recently, display apparatuses capable of displaying diverse multimedia data other than a basic function have been developing. In particular, as electronic games develop, 3-dimensional (3D) games can be displayed and used on display apparatuses mounted in television sets or computers. Game manufactures are introducing 3D images requiring a high image quality due to demand of game users.

A related art display apparatus does not support a graphic performance for processing 3-dimensional images of a high quality. Accordingly, if a related art display apparatus such as a monitor or a laptop computer reproduces the 3-dimensional images such as an electronic game, the performance of the display apparatus is degraded or slow in a processing time.

Therefore, there is a need for providing a display apparatus capable of processing graphics so as to reproduce high quality 3D images.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of the present invention provides a display apparatus which generates graphics using data received from an external device and displays the generated graphics, and a graphic display method using the same.

Another aspect of the present invention provides a display apparatus which includes a graphic processing unit to generate 3D graphics based on other graphics data and a graphic command which are received from an external device, and a graphic display method using the same.

According to an exemplary aspect of the present invention, there is provided a display apparatus including: an interface unit which receives data used to generate graphics from an external device; a graphic processing unit which generates graphics using the received data; and a display unit which displays the graphics generated by the graphic processing unit.

The interface unit may receive the received data through a Peripheral Component Interconnect Express (PCIe) bus which is mounted in the external device, and the PCI express bus may have an x1 lane.

The graphics may be 3-dimensional (3D) graphics, and include objects which are disposed in a 3D graphic space.

The received data may include at least one of a graphic command containing information regarding a graphical function to be called to generate the graphics, and graphics data, wherein the graphics data may include at least one of coordinate information indicating coordinates of the objects, and rendering information indicating a graphical effect of the objects.

The rendering information may include at least one of color information, gradation information, shadow information, and direction information.

The graphics may be 2-dimensional (2D) graphics, and the interface unit may receive non-compressed data indicating the 2D graphics from the external device.

The received data received by the interface unit may have a differential signal format, and the differential signal may be one of Low-Voltage Differential Signaling (LVDS) and Transition Minimized Differential Signaling (TMDS).

If the interface unit is connected to the external device through a cable, the display unit may operate as a dual display together with an external display unit mounted in the external device.

The graphic processing unit may be one of a graphics processing unit (GPU) and a graphics card, the external device may be one of a personal computer, a portable computer, a laptop computer, a netbook computer, and a portable game device, and the display apparatus may be one of a monitor, a television, a portable multimedia player (PMP), and a table-top device.

According to another exemplary aspect of the present invention, there is provided a method of displaying graphics by a display having a display screen and a graphics processing unit, the method including: receiving data used to generate graphics from an external device; generating the graphics in the graphics processing unit by processing the received data; and displaying the graphics on the display screen.

In receiving the received data, the received data may be received through a Peripheral Component Interconnect Express (PCIe) bus which is mounted in the external device. The PCIe bus may have an x1 lane.

The graphics may be 3-dimensional (3D) graphics, and include objects which are disposed in a 3D graphic space.

The received data may include at least one of a graphic command containing information regarding a graphical function to be called to generate the graphics, and graphics data.

The graphics data may include at least one of coordinate information indicating coordinates of the objects, and rendering information indicating a graphical effect of the objects. The rendering information may include at least one of color information, gradation information, shadow information, and direction information.

The graphics may be 2-dimensional (2D) graphics, and in receiving the received data, non-compressed data indicating the 2D graphics may be received from the external device.

The received data received from the external device may have a differential signal format including a differential signal, wherein the differential signal may be one of Low-Voltage Differential Signaling (LVDS) and Transition Minimized Differential Signaling (TMDS).

The external device may be one of a personal computer, a portable computer, a laptop computer, a netbook computer, and a portable game device.

The display may be mounted in one of a monitor, a television, a portable multimedia player (PMP), and a table-top device.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 illustrates a monitor and a laptop computer which are connected to each other according to an exemplary embodiment of the present invention;

FIG. 2 is a block diagram illustrating detailed configuration of a monitor according to an exemplary embodiment of the present invention;

FIG. 3 is a block diagram illustrating detailed configuration of a laptop computer according to an exemplary embodiment of the present invention;

FIG. 4 is a flow chart illustrating operation of a laptop computer according to an exemplary embodiment of the present invention; and

FIG. 5 is a flow chart illustrating operation of a monitor according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

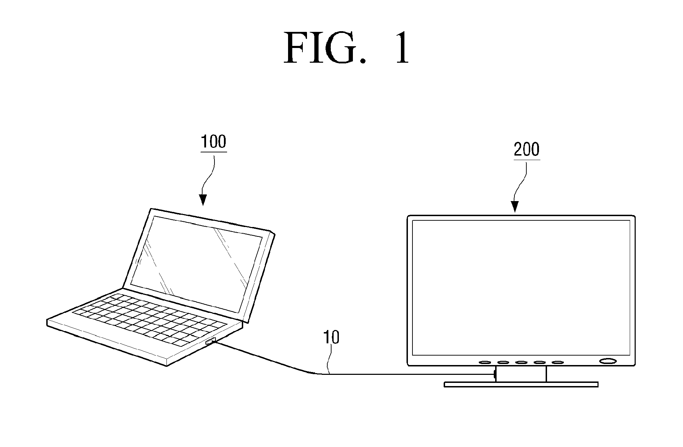

FIG. 1 illustrates a monitor and a laptop computer which are connected to each other according to an exemplary embodiment of the present invention.

Referring to FIG. 1, the laptop computer 100 is connected to the monitor 200 through a cable. The monitor 200 displays a graphic image generated by converting data received from the laptop computer 100 through the cable into a graphic. Since the laptop computer 100 is connected to the monitor 200 through the cable, the monitor 200 can display a graphic image selected by a user without the user's additional operation.

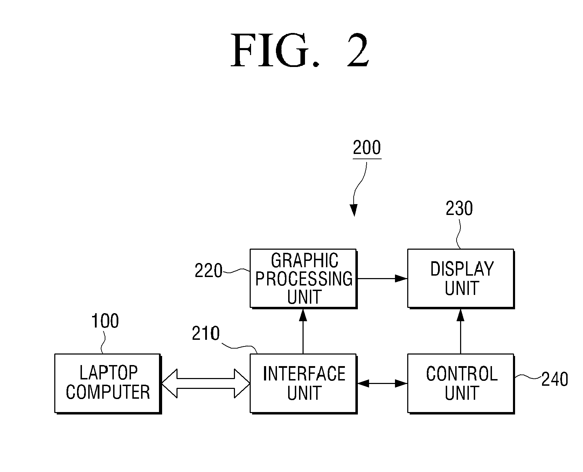

FIG. 2 is a block diagram illustrating detailed configuration of the monitor 200 according to an exemplary embodiment of the present invention. As illustrated in FIG. 2, the monitor 200 may include an interface unit 210, a graphic processing unit 220, a display unit 230, and a control unit 240.

The interface unit 210 receives data and image data from the external device 100, and outputs the received data to the graphic processing unit 220. In greater detail, the interface unit 210 receives the data of a differential signal format from the external device 100. Examples of the differential signal may be Low-Voltage Differential Signaling (LVDS), Transition Minimized Differential Signaling (TMDS), and the like.

The received data are data used to generate a graphic, including a graphic command and graphics data. The graphic includes objects which are disposed in a 3-dimensional (3D) space.

The graphic command includes information regarding a graphical function which is called to generate the components of the graphic to be reproduced on the display unit 230. The graphics data includes coordinate information and rendering information of the graphic to be reproduced on the display unit 230. The coordinate information indicates coordinates of an object to be disposed in the 3D graphic space. The rendering information includes at least one of color information, gradation information, shadow information, and direction information of the object.

The graphic processing unit 220 generates a graphic to be displayed on the display unit 230 using the received data of a differential signal format received from the interface unit 210. Examples of the graphic processing unit 220 may be a graphics processing unit (GPU), a graphics card, and the like.

More specifically, the graphic processing unit 220 calls a graphical function to be reproduced on the display unit 230 based on the graphic command received from the interface unit 210, applies the graphics data to the called graphical function, and thus generates graphics to be reproduced on the display unit 230, that is, a graphic image.

The generated graphic image may be a 3D graphic image, but is not limited thereto. The graphic processing unit 220 may generate a 2-dimensional (2D) image using the received data.

In addition, the graphic processing unit 220 generates a graphic image suitable for a resolution preset for the monitor 200 using the received data, and displays the graphic image on the display unit 230.

The control unit 240 controls the overall operation of the monitor 200, and receives movie data from the interface unit 210. The control unit 240 constitutes a frame based on the received movie data, and outputs the frame on the display unit 230. The movie data include pixel information and luminance level information. The external device 100 transmits non-compressed image data to the interface unit 210 of the monitor 200.

The display unit 230 displays the graphic image generated by the graphic processing unit 220. Examples of the display unit 230 may be a cathode ray tube (CRT), a liquid crystal display (LCD) panel, and the like.

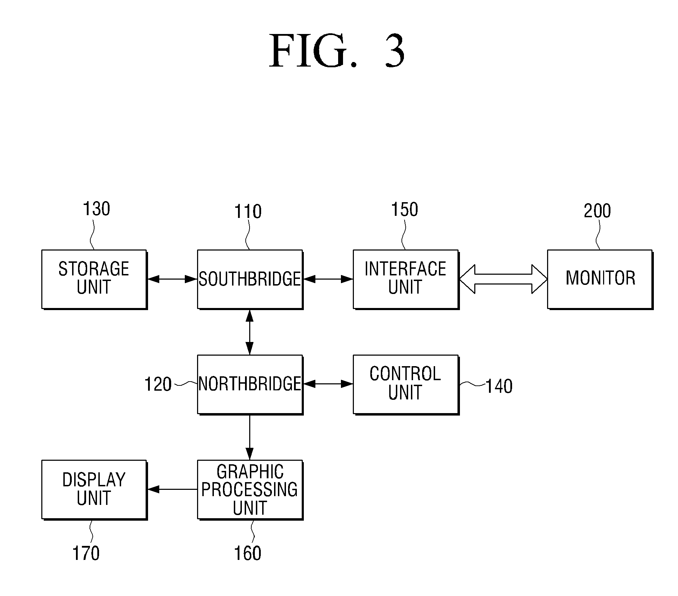

FIG. 3 is a block diagram illustrating detailed configuration of the laptop computer 100 according to an exemplary embodiment of the present invention. As illustrated in FIG. 3, the laptop computer 100 may include a southbridge 110, a northbridge 120, a storage unit 130, a control unit 140, an interface unit 150, a graphic processing unit 160, and a display unit 170.

The southbridge 110 is mounted in a main board of the laptop computer 100, and controls input or output between the device components of the laptop computer 100. The southbridge 110 outputs a signal input through an input device, such as a mouse (not shown), a keyboard (not shown), or a touch pad (not shown), to the northbridge 120. The signal input through the input device may include a command to perform a particular function according to the user's operation.

More specifically, the southbridge 110 receives a command to reproduce an image or a command to set a main display device through the input device (not shown). Subsequently, the southbridge 110 reads a graphic image corresponding to the command to reproduce an image from the storage unit 130, and outputs the read graphic image to the northbridge 120. The command to set a main display device may be input to the southbridge 110 after a driver to initialize the laptop computer 100 is installed according to the user's operation.

In addition, the southbridge 110 bypasses received data received from the north bridge 120 to the interface 150. In this case, the received data may have a differential signal format.

The northbridge 120 bypasses the graphic image and the command to set a main display device, which are received from the southbridge 110, to the control unit 140. The northbridge 120 bypasses received data, which is received from the control unit 140, to the south bridge 110.

The control unit 140 controls the overall operation of the laptop computer 100, and generates the received data using the graphic image received from the northbridge 120.

More specifically, the control unit 140 generates the received data by calculating graphic image data corresponding to the graphic image received from the northbridge, and outputs the received data to the interface unit 150. The received data includes a graphic command and graphics data. Detailed description of the graphic command and the graphics data has been given above, and is thus not repeated.

In addition, if the control unit 140 reads movie data from the storage unit 130 through the southbridge 110 and the northbridge 120, the control unit 140 outputs the movie data to the northbridge 120 without compressing the movie data. Subsequently, the movie data are bypassed by the northbridge 120 and the southbridge 110 and are output to the interface unit 150.

The movie indicates 2D graphic images, consisting of a plurality of frames, and the movie data include pixel information for each of the plurality of frames, and luminance level information.

In addition, if the control unit 140 receives a command to set the monitor 200 to be a main display device from the northbridge 120, the control unit 140 sets the monitor 200 to be a main display device.

That is, the monitor 200 operates as a main display device, and the display unit 170 mounted in the laptop computer 100 operates as a sub display device. In addition, when the display 170 mounted in the laptop computer 100 is turned off, the monitor 200 can display execution information to process a computer command and result information.

The interface unit 150 transmits the movie data and received data of the differential signal format, which are output by the southbridge 110, to the monitor 200. The interface unit 150 may be implemented with an x1 lane Peripheral Component Interconnect Express (PCIe) card.

The graphic processing unit 160 performs signal-processing of a movie image, a still image, or a 2D or 3D graphic image which is read from the storage unit 120 according to control of the control unit 140, and displays the signal-processed image on the display unit 170. The movie image, the still image, or the 2D or 3D graphic image which is read from the storage unit 120 is bypassed by the southbridge 110 and the northbridge 120, and is received by the graphic processing unit 160.

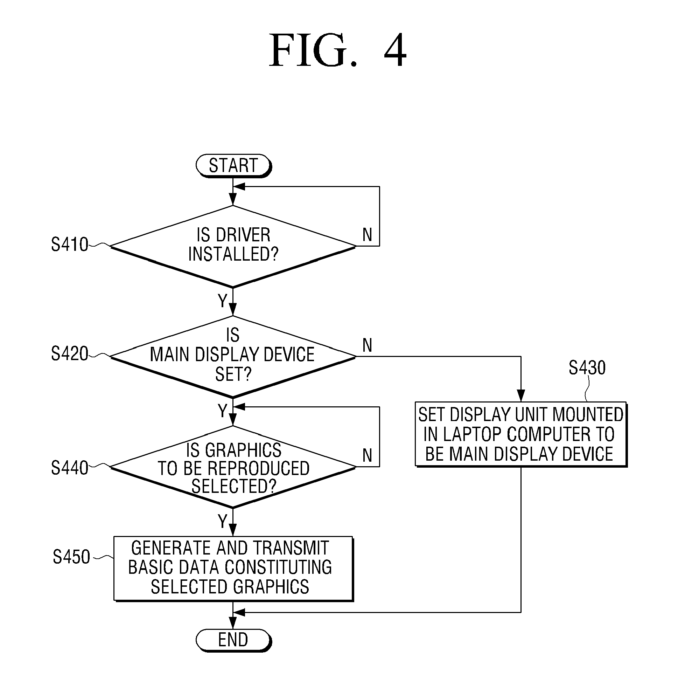

FIG. 4 is a flow chart illustrating operation of the laptop computer 100 according to an exemplary embodiment of the present invention.

A driver is installed in the laptop computer 100 through the input device (not shown) mounted in the laptop computer 100 (S410). More specifically, if the user inputs a command to install a driver using the input device (S410:Y), the driver is installed in the laptop computer 100. If the driver is not installed (S410:N), the laptop computer 100 stands by until the driver is installed.

The driver indicates a recording medium in which a program to enable the laptop computer 100 to perform its natural function is recorded. Examples of the input device may be a mouse (not shown), a keyboard (not shown), a touch pad (not shown), and the like.

More specifically, if the user or a system designer installs the driver in the laptop computer 100 using the input device, the laptop computer 100 is initialized. In this case, if a cable connects the laptop computer 100 with the monitor 200, an image to be displayed on the monitor 200 can be displayed on the monitor 200 without the user's additional operation.

Subsequently, the southbridge 110 receives a command to set a main display device from the user through the input device (not shown) (S420). That is, the southbridge 110 receives a command to set either the display unit 170 mounted in the laptop computer 100 or the monitor 200 to be a main display device from the user.

Later, if the southbridge 110 receives a command to set the monitor 200 to be a main display device from the user (S420:Y), the control unit 140 sets the monitor 200 to be a main display device. If the southbridge 110 does not receive a command to set a main display device from the user (S420:N), the control unit 140 sets the display unit 170 mounted in the laptop computer 100 to be a main display device (S430).

When the monitor 200 is set to be a main display device by the user, if a cable connects the laptop computer 100 with the monitor 200, an image can be displayed directly on the monitor 200 without the user's additional operation.

If the user selects graphics to be displayed (S440:Y), data constituting the selected graphics are transmitted to the monitor 200 (S450).

More specifically, if it is assumed that the monitor 200 is set to be a main display device, the southbridge 110 receives selection of a graphic image to be displayed on the monitor 200 from the user through the input device, and reads the selected graphic image from the storage unit 130. The selected graphic image is bypassed by the southbridge 110 and the northbridge 120, and is transmitted to the control unit 140.

Subsequently, the control unit 140 generates data by calculating graphic image data corresponding to the graphic image received from the northbridge 120. The generated received data bypasses the northbridge 120 and the southbridge 110, and are transmitted to the interface unit 150. The received data includes a graphic command and graphics data. Detailed description of the graphic command and the graphics data has been given above, and is thus not repeated.

Later, the interface unit 150 transmits the received data to the monitor 200.

More specifically, the interface unit 150 transmits the received data of a differential signal format to the monitor 200 through a PCIe bus. The interface unit 150 may be implemented by brining a PCIe card into contact with a PCI slot disposed on the main board of the laptop computer 100.

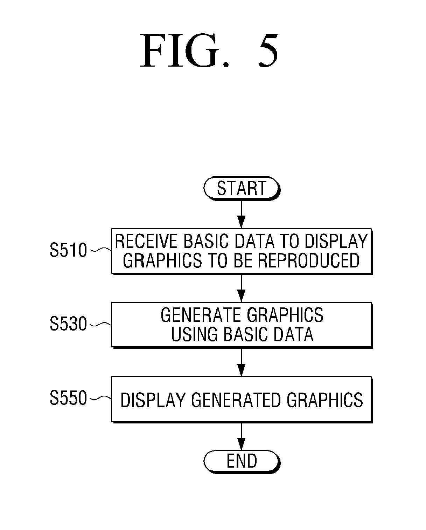

FIG. 5 is a flow chart illustrating operation of the monitor 200 according to an exemplary embodiment of the present invention.

The interface unit 210 receives data needed to display graphics to be reproduced (S51 0).

More specifically, the interface unit 210 receives the received data generated in operation S450 from the laptop computer 100. In this case, the interface unit 210 in the monitor 200 receives the received data of a differential signal format from the laptop computer 100 through the cable 10. The cable 10 connects the monitor 200 with the laptop computer 100, and supports transmission and reception of data between the monitor 200 and the laptop computer 100 through the PCIe bus.

Subsequently, the graphic processing unit 220 generates graphics to be reproduced using the received data (S530).

More specifically, the graphic processing unit 220 calls a graphical function to be reproduced on the display unit 230 based on a graphic command received from the interface unit 210, applies the graphics data to the called graphical function, and thus generates graphics to be reproduced on the display unit 230. In this case, the graphic processing unit 220 generates 3D graphics of a high quality suitable for a resolution preset for the monitor 200.

Subsequently, the display unit 230 displays the generated graphics (S550). That is, the display unit 230 displays the 3D graphics of a high quality which is scaled to have the preset resolution by the graphic processing unit 220. If the graphic processing unit 220 generates a 2D graphic image, the display unit 230 displays the 2D graphic image, and displays a movie if the display unit 230 receives a movie frame from the control unit 230.

In a display apparatus according to an exemplary embodiment of the present invention, if the monitor 200 is set to be a main display device, the graphic processing unit 220 generates a graphic image selected by the user and the display unit 230 displays the graphic image. However, the present inventive concept is not limited thereto. The monitor 200 may operate as a dual monitor with the display unit 170 mounted in the external device 100.

In a display apparatus according to an exemplary embodiment of the present invention, the interface unit 210 receives a movie from the external device 100. However, the present inventive concept is not limited thereto. The interface unit 210 may also receive at least one of still image data, audio data, and text data from the external device 100.

In a display apparatus according to an exemplary embodiment of the present invention, the graphic processing unit 220 may be implemented with a chip module which is separated from the display apparatus, and thus can independently be installed or replaced.

In an external device according to an exemplary embodiment of the present invention, a PCIe card which is in contact with a PCI slot disposed on the external device has been described as example of the interface unit 150. However, the present inventive concept is not limited thereto. Another example of the interface unit 150 may be a PCI bridge integrated circuit (IC), so the external device 100 can transfer data with another external device which is connected to the external device 100 such as a television, the Ethernet, or the Wi-Fi through the PCI bridge IC.

Until now, it is shown that the laptop computer 100 transmits data used to generate the components of graphics and the monitor 200 receives the data and generates graphics. However, the present inventive concept is not limited thereto. The monitor 200 is merely an example of a display apparatus. Televisions, portable multimedia players (PMPs), or table-top devices may be used as a display apparatus. The laptop computer 100 is merely an example of an external device. Personal computers, portable computers, laptop computers, netbooks, or portable game devices may be used as an external device.

In the exemplary embodiment of the present invention, the features that an external device transmits data and a monitor receives the data and generates graphics can be implemented with a computer program so that a recording medium which is readable by a computer can execute the features.

As can be appreciated from the above description, a graphic processing unit mounted in a display apparatus generates graphics using data received from an external device, so the display apparatus can display a 3D or 2D image of a high quality. Therefore, the display apparatus can provide 3D games requiring a high graphic performance as images of a high quality.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus comprising:
an interface unit which receives data used to generate graphics from an external device;
a graphic processing unit which generates the graphics using the received data; and
a display unit which displays the graphics generated by the graphic processing unit.

2. The display apparatus according to claim 1, wherein the interface unit receives the received data through a Peripheral Component Interconnect Express (PCIe) bus which is mounted in the external device.

3. The display apparatus according to claim 2, wherein the PCIe bus has an x1 lane.

4. The display apparatus according to claim 1, wherein the graphics are three-dimensional(3D) graphics, and includes objects which are disposed in a 3D graphic space.

5. The display apparatus according to claim 4, wherein the received data comprises at least one of a graphic command containing information regarding a graphical function to be called to generate the graphics, and graphics data, and
wherein the graphics data comprises at least one of coordinate information indicating coordinates of the objects, and rendering information indicating a graphical effect of the objects.

6. The display apparatus according to claim 5, wherein the rendering information comprises at least one of color information, gradation information, shadow information, and direction information.

7. The display apparatus according to claim 1, wherein the graphics are two-dimensional(2D) graphics, and the interface unit receives non-compressed data indicating the 2D graphics from the external device.

8. The display apparatus according to claim 1, wherein if the interface unit is connected to the external device through a cable, the display unit operates as a dual display together with an external display unit mounted in the external device.

9. A method of displaying graphics by a display having a display screen and a graphics processing unit, the method comprising:
receiving data used to generate graphics from an external device;
generating the graphics in the graphics processing unit by processing the received data; and
displaying the graphics on the display screen.

10. The display method according to claim 9, wherein the receiving of the received data, the received data are received through a Peripheral Component Interconnect Express (PCIe) bus which is mounted in the external device.

11. The display method according to claim 10, wherein the PCIe bus has an x1 lane.

12. The display method according to claim 9, wherein the graphics are 3-dimensional graphics, and includes objects which are disposed in a 3-diemensional graphic space.

13. The display method according to claim 12, wherein the received data comprises at least one of a graphic command containing information regarding a graphical function to be called to generate the graphics, and graphics data, and
wherein the graphics data comprises at least one of coordinate information indicating coordinates of the objects, and rendering information indicating a graphical effect of the objects.

14. The display method according to claim 13, wherein the rendering information comprises at least one of color information, gradation information, shadow information, and direction information.

15. The display method according to claim 9, wherein the graphics are 2-dimensional graphics, and in receiving the received data, non-compressed data indicating the 2-dimensional graphics are received from the external device.
